# DEMANDE DE BREVET EUROPEEN

(11) **EP 3 372 532 A1**
(43) Date de publication de la demande: **12.09.2018**
(21) Numéro de dépôt: 18159240.3
(22) Date de dépôt: 28.02.2018
(51) Int. Cl.: B65G 1/04, B65G 1/06, G07F 17/00, G07F 11/04, G07F 11/16

(54) **CHARIOT POUR DISTRIBUTEUR AUTOMATIQUE DE PRODUITS ALIMENTAIRES PRÉPARÉS, NOTAMMENT DE PIZZA**

(30) Priorité: 07.03.2017 FR 1751835
(71) Demandeur: ADIAL, 14100 Lisieux (FR)
(72) Inventeur: GOUPIL, Antony, 14100 SAINT DESIR (FR)
(74) Mandataire: Gevers & Orès

(57) **Abrégé**

L'invention concerne un chariot (10) pour un distributeur automatique de produits alimentaires préparés comprenant un bâti (11), et un dispositif de préhension (12) conçu pour saisir une boîte en carton (200) comprenant un produit alimentaire préparé, le dispositif de préhension comprenant une paire de mâchoires (13a, 13b) articulées chacune sur un support (14) entre une position fermée dans laquelle lesdites mâchoires pincent la boîte en carton et une position ouverte dans laquelle les mâchoires libèrent la boîte en carton, le dispositif de préhension étant en outre conçu pour se déplacer en translation entre une position avancée dans laquelle les mâchoires sont en position fermée et pincent la boîte en carton et une position reculée, le dispositif de préhension comprenant aussi des premiers organes de rappel élastique (16a, 16b) conçus pour rappeler chacune des mâchoires vers la position fermée et une pièce de blocage (18) conçue pour bloquer les mâchoires en position ouverte, lorsque le dispositif de préhension se déplace de la position reculée à la position avancée, et pour libérer les mâchoires, lorsque le dispositif de préhension est en position avancée.

## Description

### DOMAINE TECHNIQUE

L'invention concerne un chariot pour distributeur automatique de produits alimentaires préparés, notamment de pizza, et un distributeur automatique de produits alimentaires préparés comprenant un tel chariot.

### ETAT DE L'ART

De manière classique, un distributeur automatique de pizza comprend une interface utilisateur par laquelle un utilisateur sélectionne la pizza qu'il souhaite acheter, un compartiment de stockage dans lequel une ou plusieurs boîtes à pizza comportant une pizza crue ou surgelée sont rangées et un compartiment de cuisson et de livraison communiquant avec le compartiment de stockage et dans lequel la pizza préalablement sélectionnée par un utilisateur est cuite dans sa boîte à pizza puis délivrée à l'utilisateur via un orifice de livraison.

Le compartiment de stockage comprend par exemple un rayonnage dans lequel la ou les boîtes à pizza sont rangées et un chariot conçu pour saisir par pincement ou serrage, dans le rayonnage, la boîte à pizza correspondant à la pizza sélectionnée par l'utilisateur et pour acheminer ladite boîte à pizza jusqu'au compartiment de cuisson et de livraison.

Pour cela, le chariot peut comprendre un bâti et un dispositif de préhension monté mobile en translation sur le bâti entre une position reculée et une position avancée dans laquelle le dispositif de préhension saisit la boîte à pizza sélectionnée.

Afin de saisir la boîte à pizza sélectionnée, le dispositif de préhension comprend une paire de mâchoires articulées sur un support entre une position fermée dans laquelle les mâchoires saisissent la boîte à pizza sélectionnée et une position ouverte. Par défaut, les mâchoires sont maintenues en position fermée par des organes de rappel élastique montés entre chacune des mâchoires et le support du dispositif de préhension et elles ne s'ouvrent que sous l'effet d'un effort s'opposant à celui exercé par les organes de rappel élastique.

Ainsi, la saisie de la boîte à pizza sélectionnée par l'utilisateur et son acheminement jusqu'au compartiment de cuisson et de livraison se déroule comme suit.

Dans un premier temps, le dispositif de préhension se déplace de la position reculée à la position avancée. Les mâchoires sont alors en position fermée et le restent jusqu'à ce qu'elles entrent en contact avec une paroi latérale de la boîte à pizza sélectionnée faisant face au chariot.

Les mâchoires s'ouvrent ensuite sous l'effet du déplacement du dispositif de préhension vers la position avancée et de l'effort de réaction appliqué par la boîte à pizza sur les mâchoires. Un profil incliné formant came de chacune des mâchoires glisse le long de la paroi latérale de la boîte à pizza en direction du coin qui leur est adjacent.

Lorsque la came de chaque mâchoire franchit le coin de la boîte à pizza qui leur est adjacent, l'effort qu'exerçait la boîte à pizza sur chacune des mâchoires et qui tendait à les ouvrir est relâché de sorte que les mâchoires se referment sur les parois latérales opposées de la boîte à pizza et saisissent ainsi la boîte à pizza. Le dispositif de préhension est alors en position avancée et les mâchoires sont à nouveau en position fermée et sont serrées élastiquement.

Puis, le dispositif de préhension se déplace de la position avancée vers la position reculée pour sortir la boîte à pizza du rayonnage, cette dernière étant retenue par les mâchoires.

En fin de course du dispositif de préhension, la boîte à pizza est libérée des mâchoires sous l'effet d'une butée contre laquelle ladite boîte à pizza vient s'appuyer et du déplacement du dispositif de préhension vers la position reculée, en forçant ainsi l'ouverture des mâchoires.

La boîte à pizza peut alors être acheminée jusqu'au compartiment de cuisson et de livraison pour y cuire la pizza qu'elle contient, et enfin livrer à l'utilisateur la boîte à pizza contenant la pizza cuite.

Lorsque la boîte à pizza est insuffisamment rigide ou lorsqu'elle a été ramollie par l'humidité régnant dans le compartiment de stockage, ou encore lorsque la boîte à pizza n'a pas été positionnée de manière suffisamment centrée par rapport aux mâchoires du dispositif de préhension, il arrive que les mâchoires ne réussissent pas à la saisir.

Le distributeur automatique de pizza n'est alors pas en mesure de livrer la pizza sélectionnée par l'utilisateur.

Il existe donc un besoin d'augmenter la fiabilité avec laquelle les mâchoires du dispositif de préhension du chariot saisissent la boîte à pizza.

Le document US 5 435 685 A décrit un autre exemple de distributeur automatique de produits alimentaires préparés comprenant un dispositif de préhension qui se déplace en translation entre une position reculée et une position avancée et qui est muni d'une paire de mâchoires conçues pour s'écarter et se rapprocher linéairement l'une par rapport à l'autre de sorte à saisir une boîte contenant un produit alimentaire préparé.

Chacune des mâchoires comprend aussi un doigt de préhension monté basculant sur ladite mâchoire entre une position horizontale et une position verticale. Les doigts de préhension comprennent en outre des saillies s'insérant dans la boîte saisie.

En position avancée, les mâchoires se rapprochent l'une de l'autre linéairement de sorte à saisir la boîte contenant le produit alimentaire préparé et à engager les saillies des doigts de préhension dans ladite boîte. Puis, sous l'effet du poids de la boîte et de son contenu, les doigts de préhension basculent vers le bas, jusqu'à la position verticale.

Le dispositif de préhension achemine ensuite la boîte jusqu'à un dispositif prévu pour bouillir ou pour décongeler le produit alimentaire préparé, puis jusqu'à une porte de livraison où la boîte est relâchée par les mâchoires s'écartant l'une de l'autre linéairement. Libérés du poids de la boîte et de son contenu, les doigts de préhension peuvent alors revenir alors en position horizontale sous l'effet de moyens de rappel élastique. Le dispositif de préhension peut ainsi aller saisir une nouvelle boîte comme précédemment décrit.

### PRESENTATION DE L'INVENTION

La présente invention a pour but de pallier ces inconvénients, notamment en proposant un chariot pour un distributeur automatique de produits alimentaires préparés améliorant la fiabilité avec laquelle les mâchoires du dispositif de préhension dudit chariot saisissent la boîte en carton comprenant le produit alimentaire préparé sélectionné par un utilisateur.

Plus précisément, l'invention a pour objet un chariot pour un distributeur automatique de produits alimentaires préparés, notamment de pizza, comprenant :
- un bâti,
- au moins un dispositif de préhension conçu pour saisir une boîte en carton comprenant un produit alimentaire préparé, le dispositif de préhension comprenant :
   ∘ un support,
   ∘ une paire de mâchoires chacune articulées sur le support autour d'un axe de pivotement dans un premier et dans un deuxième sens de pivotement opposés,
      chacune des mâchoires étant conçue pour pivoter autour de son axe de pivotement entre une position fermée dans laquelle lesdites mâchoires pincent la boîte en carton et une position ouverte dans laquelle les mâchoires libèrent la boîte en carton,
   ∘ des premiers organes de rappel élastique conçus pour rappeler chacune des mâchoires en pivotement dans le premier sens de pivotement autour de son axe de pivotement vers la position fermée,
- le support étant monté mobile en translation par rapport au bâti suivant un premier axe de translation, sensiblement orthogonal par rapport aux axes de pivotement des mâchoires, le dispositif de préhension étant conçu pour se déplacer en translation par rapport au bâti suivant le premier axe de translation entre une position avancée dans laquelle les mâchoires sont en position fermée et pincent la boîte en carton et une position reculée.

Le dispositif de préhension comprend en outre une pièce de blocage conçue pour bloquer les mâchoires en position ouverte, lorsque le dispositif de préhension se déplace de la position reculée vers la position avancée, et pour relâcher les mâchoires, lorsque le dispositif de préhension atteint la position avancée.

Selon différents modes de réalisation de l'invention, qui pourront être pris ensemble ou séparément :
- la pièce de blocage est montée basculante sur le support dans un premier et dans un deuxième sens de basculement opposés autour d'un axe de basculement, sensiblement orthogonal aux axes d'articulation des mâchoires, entre une position de blocage dans laquelle chacune des mâchoires est bloquée en pivotement dans le premier sens de pivotement, lorsque les mâchoires sont en position ouverte, et une position de relâchement dans laquelle chacune des mâchoires est libre de pivoter autour de son axe de pivotement par rapport à la pièce de blocage ;
- la pièce de blocage est conçue pour basculer dans le deuxième sens de basculement autour de l'axe de basculement de la position de blocage à la position de relâchement, lorsque le dispositif de préhension se déplace de la position reculée vers la position avancée, pour libérer les mâchoires en pivotement ;
- le bâti comprend une première surface de blocage conçue pour entraîner la pièce de blocage en basculement dans le deuxième sens de basculement autour de l'axe de basculement de la position de blocage à la position de relâchement, lorsque le dispositif de préhension se déplace de la position reculée vers la position avancée ;
- la pièce de blocage comprend une première surface de blocage contre laquelle les mâchoires s'appuient, lorsque la pièce de blocage est en position de blocage et que les mâchoires sont en position ouverte ;
- la pièce de blocage comprend des deuxièmes organes de rappel élastique conçus pour rappeler la pièce de blocage en basculement dans le premier sens de basculement autour de l'axe de basculement vers la position de blocage ;
- le bâti comprend une deuxième surface de blocage conçue pour entraîner chacune des mâchoires en pivotement dans le deuxième sens de pivotement autour de son axe de pivotement de la position fermée vers la position ouverte, lorsque le dispositif de préhension se déplace par rapport au bâti de la position avancée vers la position reculée ;
- les mâchoires sont en outre conçues pour :
   ∘ entraîner la pièce de blocage en basculement dans le deuxième sens de basculement autour de l'axe de basculement de la position de blocage vers la position de relâchement, lorsque le dispositif de préhension se déplace de la position avancée vers la position reculée et que chacune des mâchoires pivote dans le deuxième sens de pivotement autour de l'axe de pivotement de la position fermée vers la position ouverte, et
   ∘ lâcher la pièce de blocage, lorsque les mâchoires atteignent la position ouverte et que la pièce de blocage atteint la position de relâchement ;
- la pièce de blocage comprend une surface de came coopérant avec les mâchoires, lorsque lesdites mâchoires entraînent la pièce de blocage en basculement dans le deuxième sens de basculement autour de l'axe de basculement de la position de blocage vers la position de relâchement.

L'invention a aussi pour objet un distributeur de produits alimentaires préparés, notamment de pizza, comprenant un chariot tel que précédemment décrit.

### PRESENTATION DES DESSINS

D'autres caractéristiques et avantages de l'invention apparaîtront au cours de la lecture de la description détaillée qui va suivre pour la compréhension de laquelle on se reportera aux dessins annexés dans lesquels :
- la figure 1 est une vue partielle, de dessous, d'un chariot pour un distributeur automatique de produits alimentaires préparés selon un mode de réalisation de l'invention, dans lequel un dispositif de préhension du chariot se déplace vers une position avancée ;
- la figure 2 est une vue de détail de la figure 1 ;
- la figure 3 est une vue partielle, en perspective, du chariot illustré aux figures 1 et 2, dans lequel le dispositif de préhension du chariot se déplace vers une position avancée ;
- la figure 4 est une vue partielle, de dessous, du chariot illustré aux figures 1 à 3, dans lequel le dispositif de préhension du chariot se déplace vers une position reculée ;
- la figure 5 est une vue en perspective d'une pièce de blocage du chariot illustrée aux figures 1 à 4 ;
- la figure 6 est une vue de face du chariot illustré aux figures 1 à 4, dans lequel le dispositif de préhension est en position reculée ;
- la figure 7 est une vue schématique, de profil, d'un distributeur automatique de produits alimentaires préparés comprenant le chariot illustré aux figures 1 à 6.

### DESCRIPTION DETAILLEE

A titre préliminaire, on définit un repère orthonormé comprenant une direction longitudinale X, une direction transversale Y et une direction verticale Z, les directions longitudinale et transversale X, Y étant horizontales.

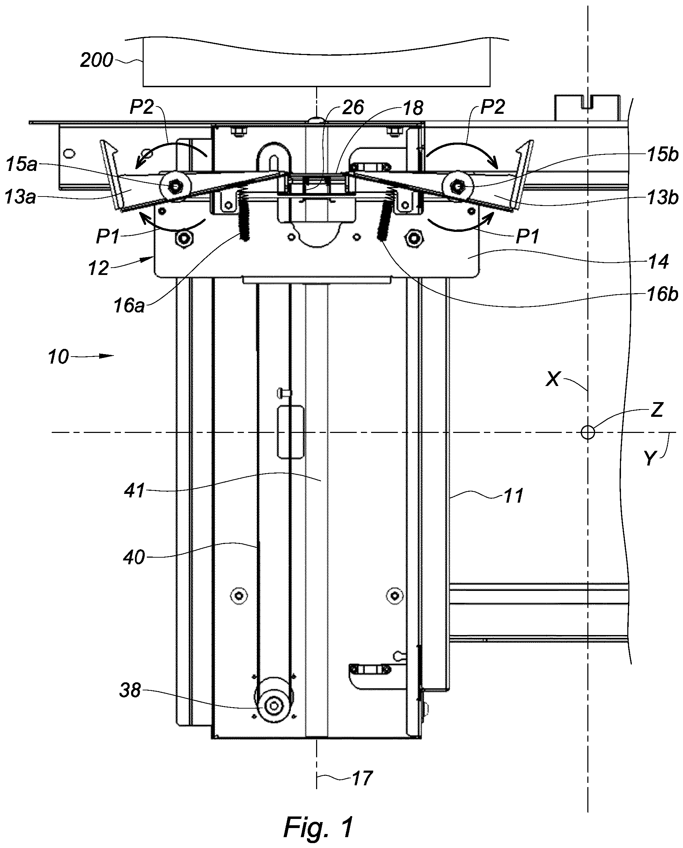

Les figures 1 à 6 montrent un chariot 10 pour un distributeur 100 automatique de produits alimentaires préparés selon un mode de réalisation de l'invention.

Les produits alimentaires préparés peuvent être crus ou surgelés.

Les produits alimentaires préparés comprennent par exemple des pizzas et/ou des quiches.

Le chariot 10 comprend un bâti 11 et au moins un dispositif de préhension 12 conçu pour saisir une boîte en carton 200 comprenant un produit alimentaire préparé.

Le chariot 10 comprend par exemple deux dispositifs de préhension 12 agencés de part et d'autre d'un plan formé par la direction longitudinale X et la direction verticale Z. Sur les figures 1 à 3, seul l'un des deux dispositifs de préhension 12 est représenté.

La boîte en carton 200 présente par exemple une forme parallélépipédique. Elle comprend un fond plan qui peut être rectangulaire, carré ou hexagonal, et des parois latérales planes rectangulaires s'étendant sensiblement perpendiculairement depuis le fond. Le fond et les parois latérales définissent ensemble un espace accueillant le produit alimentaire préparé. La boîte en carton 200 comprend en outre un couvercle articulé sur l'une des parois latérales pour venir fermer l'espace défini par le fond et les parois latérales. Le couvercle comprend par exemple une partie plane de même forme que le fond et qui est agencée parallèlement audit fond, lorsque le couvercle recouvre l'espace, et des ailettes planes s'étendant sensiblement perpendiculairement depuis la partie plane du couvercle en direction du fond, lorsque le couvercle recouvre l'espace. Les ailettes sont par exemple prévues pour être agencées à l'intérieur de l'espace défini par le fond et les parois latérales, lorsqu'il est fermé par le couvercle.

La boîte en carton 200 est disposée par rapport au chariot 10 de sorte que son fond soit agencé sensiblement perpendiculairement à la direction verticale Z et que l'une de ses parois latérales soit agencée sensiblement perpendiculairement à la direction longitudinale X et en regard du chariot 10.

Le dispositif de préhension 12 comprend une paire de mâchoires 13a, 13b et un support 14 sur lequel chacune des mâchoires 13a, 13b est articulée autour d'un axe de pivotement 15a, 15b dans un premier et dans un deuxième sens de pivotement P1, P2 opposés.

Les axes de pivotement 15a, 15b sont sensiblement parallèles entre eux. Les axe de pivotement 15a, 15b sont par exemple sensiblement parallèles à la direction verticale Z.

Chacune des mâchoires 13a, 13b est conçue pour pivoter autour de son axe de pivotement 15a, 15b entre une position ouverte et une position fermée.

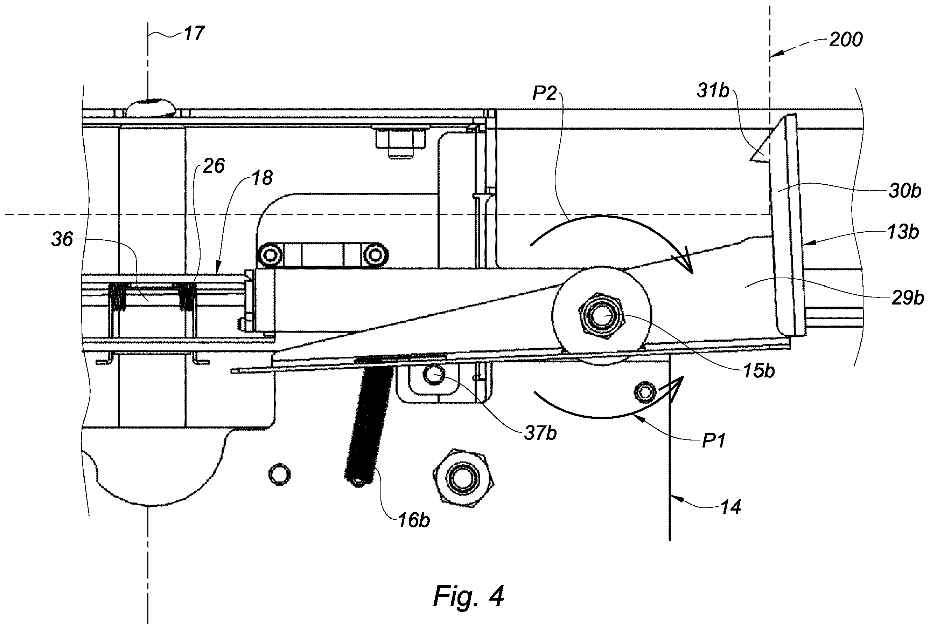

Lorsque les mâchoires 13a, 13b sont en position fermée, lesdites mâchoires 13a, 13b saisissent ou encore pincent la boîte en carton 200. Autrement dit, dans la position fermée, les mâchoires 13a, 13b sont en prises avec ou encore retiennent la boîte en carton 200. Encore autrement dit, dans la position fermée, les mâchoires 13a, 13b sont solidaires de la boîte en carton 200. Sur la figure 4, la mâchoire 13b est illustrée en position fermée, saisissant la boîte en carton 200.

En position fermée, les mâchoires 13a, 13b pincent par exemple des parois latérales opposées de la boîte en carton 200. Les parois latérales pincées de la boîte en carton 200 sont par exemple agencées sensiblement perpendiculairement à la direction transversale Y.

Lorsque les mâchoires 13a, 13b sont en position ouverte, lesdites mâchoires 13a, 13b libèrent la boîte en carton 200. Autrement dit, dans la position ouverte des mâchoires 13a, 13b, la boîte en carton 200 est libre en mouvement par rapport aux mâchoires 13a, 13b.

Lorsque les mâchoires 13a, 13b pivotent de la position ouverte vers la position fermée, chacune des mâchoires 13a, 13b pivote dans le premier sens de pivotement P1 autour de son axe de pivotement 15a, 15b. A l'inverse, lorsque les mâchoires 13a, 13b pivotent de la position fermée vers la position ouverte, chacune des mâchoires 13a, 13b pivote dans le deuxième sens de pivotement P2 autour de son axe de pivotement 15a, 15b.

Les premiers sens de pivotement P1 des mâchoires 13a, 13b sont opposés. De même, les deuxièmes sens de pivotement P2 des mâchoires 13a, 13b sont opposés (figures 1, 2 et 4).

Le dispositif de préhension 12 comprend en outre des premiers organes de rappel élastique 16a, 16b conçus pour entraîner le pivotement de chacune des mâchoires 13a, 13b dans le premier sens de pivotement P1 autour de son axe de pivotement 15a, 15b de la position ouverte vers la position fermée. Autrement dit, les premiers organes de rappel élastique 16a, 16b sont conçus pour rappeler chacune des mâchoires 13a, 13b en pivotement dans le premier sens de pivotement P1 autour de son axe de pivotement 15a, 15b vers la position fermée.

De cette manière, sans l'application d'un effort extérieur sur les mâchoires 13a, 13b s'opposant à celui des premiers organes de rappel élastique 16a, 16b, les mâchoires 13a, 13b sont en position fermée. Autrement dit, par défaut, les mâchoires 13a, 13b sont en position fermée.

Le dispositif de préhension 12 est monté, par l'intermédiaire du support 14, mobile en translation sur le bâti 11 suivant un premier axe de translation 17, sensiblement orthogonal par rapport aux axes de pivotement 15a, 15b des mâchoires 13a, 13b.

Le premier axe de translation 17 est par exemple horizontal, notamment sensiblement parallèle à la direction longitudinale X.

Le dispositif de préhension 12 est conçu, par l'intermédiaire du support 14, pour se déplacer en translation par rapport au bâti 11 suivant le premier axe de translation 17 entre une position avancée et une position reculée.

Lorsque le dispositif de préhension 12 est en position avancée, les mâchoires 13a, 13b sont en position fermée et saisissent ou encore pincent la boîte en carton 200.

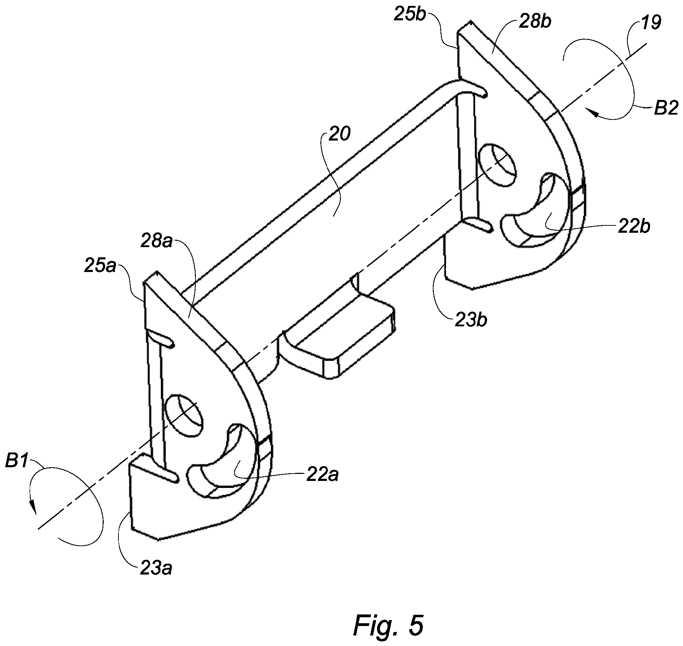

Sur les figures 1 à 3, le dispositif de préhension 12 se déplace de la position reculée vers la position avancée. Sur la figure 4, le dispositif de préhension 12 se déplace de la position avancée vers la position reculée. Sur la figure 5, le dispositif de préhension 12 atteint la position reculée.

Le dispositif de préhension 12 comprend en outre une pièce de blocage 18 conçue pour bloquer les mâchoires 13a, 13b en position ouverte, lorsque le dispositif de préhension 12 se déplace de la position reculée vers la position avancée, et pour relâcher les mâchoires 13a, 13b, lorsque le dispositif de préhension 12 atteint la position avancée. Les figures 1 à 3 montrent le blocage des mâchoires 13a, 13b en position ouverte.

De cette manière, lorsque le dispositif de préhension 12 est en position avancée, la pièce de blocage 18 relâche les mâchoires 13a, 13b qui étaient en position ouverte et qui pivotent dès lors dans leur premier sens de pivotement P1, sous l'action des premiers organes de rappel élastique 16a, 16b, de la position ouverte vers la position fermée, et viennent ainsi pincer la boîte en carton 200.

Cela est particulièrement avantageux car les mâchoires 13a, 13b avancent vers la boîte en carton 200 en position ouverte et ne se referment sur ladite boîte en carton 200 qu'une fois la boîte en carton 200 déjà positionnée entre lesdites mâchoires 13a, 13b. Autrement dit, l'ouverture et la fermeture des mâchoires 13a, 13b ne dépendent pas d'une interaction entre les mâchoires 13a, 13b et la boîte en carton 200. Le risque que les mâchoires 13a, 13b ne réussissent pas à saisir ou encore à pincer la boîte en carton 200 est ainsi limité.

Par ailleurs, la préhension de la boîte en carton 200 par les mâchoires 13a, 13b n'est plus dépendante du positionnement précis de la boîte en carton 200 par rapport aux mâchoires 13a, 13b, notamment suivant la direction transversale Y. Autrement dit, l'avancée des mâchoires 13a, 13b en position ouverte autorise un jeu plus important, notamment suivant la direction transversale Y, pour le positionnement de la boîte en carton 200 par rapport auxdites mâchoires 13a, 13b.

En outre, si la boîte en carton 200 n'est pas suffisamment rigide ou si la boîte en carton 200 a été ramollie par l'humidité, elle ne risque pas d'empêcher les mâchoires 13a, 13b de saisir ladite boîte en carton 200, dans la mesure où l'ouverture et la fermeture des mâchoires 13a, 13b ne la font pas intervenir.

La pièce de blocage 18 est par exemple montée basculante sur le support 14 dans un premier et dans un deuxième sens de basculement B1, B2 opposés autour d'un axe de basculement 19, sensiblement orthogonal aux axes de pivotement 15a, 15b des mâchoires 13a, 13b, entre une position de blocage et une position de relâchement.

L'axe de basculement 19 est par exemple horizontal, notamment sensiblement perpendiculaire au premier axe de translation 17. L'axe de basculement 19 est par exemple sensiblement parallèle à la direction transversale Y.

Lorsque la pièce de blocage 18 est en position de blocage et que les mâchoires 13a, 13b sont en position ouverte, la pièce de blocage 18 bloque chacune des mâchoires 13a, 13b en pivotement dans le premier sens de pivotement P1 vers la position fermée. Les mâchoires 13a, 13b sont alors bloquée en position ouverte. Lorsque la pièce de blocage 18 est en position de relâchement, la pièce de blocage 18 relâche les mâchoires 13a, 13b. Autrement dit, lorsque la pièce de blocage 18 est en position de relâchement, chacune des mâchoires 13a, 13b est libre de pivoter autour de son axe de pivotement 15a, 15b par rapport à la pièce de blocage 18.

Lorsque la pièce de blocage 18 bascule de la position de relâchement à la position de blocage, la pièce de blocage 18 bascule dans le premier sens de basculement B1 autour de l'axe de basculement 19. A l'inverse, lorsque la pièce de blocage 18 bascule de la position de blocage à la position de relâchement, la pièce de blocage 18 bascule dans le deuxième sens de basculement B2.

Un exemple de pièce de blocage 18 est montré plus en détail à la figure 5.

La pièce de blocage 18 comprend par exemple une âme 20, globalement plane, agencée sensiblement parallèlement par rapport à l'axe de basculement 19.

La pièce de blocage 18 peut en outre comprendre une paire d'ailes 21a, 21b s'étendant chacune sensiblement perpendiculairement par rapport à l'axe de basculement 19 depuis une extrémité de l'âme 20 suivant l'axe de basculement 19.

La pièce de blocage 18 présente ainsi globalement une forme de U.

La pièce de blocage 18 est par exemple montée basculante sur le support 14 par l'intermédiaire des ailes 21 a, 21b de ladite pièce de blocage 18.

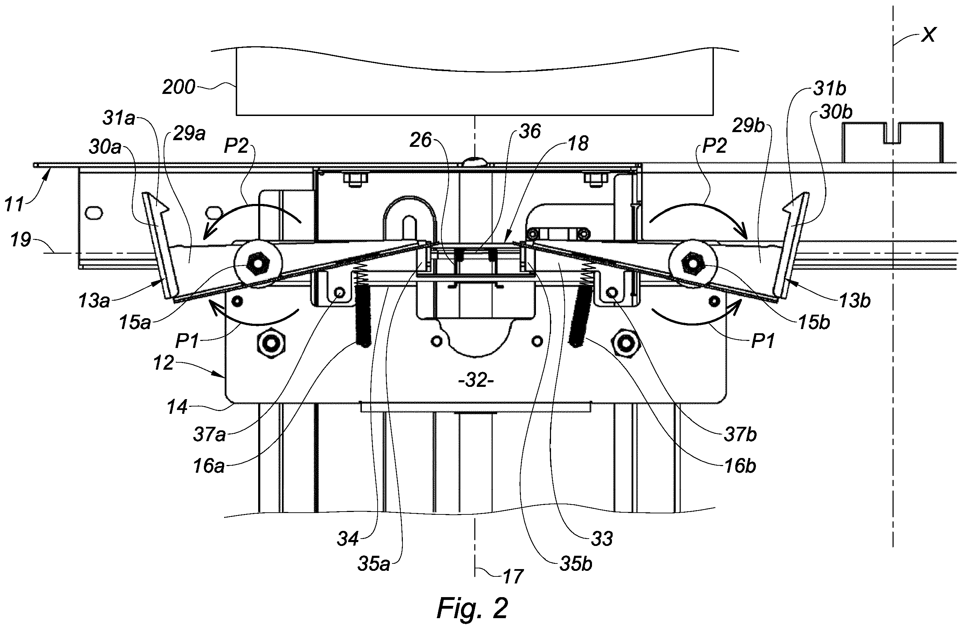

Pour cela, les ailes 21a, 21b comprennent par exemple des ouvertures s'étendant suivant l'axe de basculement 19 et accueillant une vis 36 solidaire du support 14 (figures 2, 3 et 4).

L'âme 20 est par exemple agencée globalement perpendiculairement par rapport au premier axe de translation 17, lorsque la pièce de blocage 18 est en position de blocage.

Les ailes 21a, 21b de la pièce de blocage 18 peuvent en outre comprendre chacune une fente 22a, 22b conçue pour coopérer avec un doigt solidaire du support 14 et s'étendant parallèlement à l'axe de basculement 19, de sorte à guider le basculement de la pièce de blocage 18 entre la position de blocage et la position de relâchement et à limiter la portion angulaire sur laquelle la pièce de blocage 18 bascule autour de l'axe de basculement 19 entre la position de blocage et la position de relâchement. La fente 22a, 22b contraint la pièce de blocage 18 à basculer dans le premier sens de basculement B1 de la position de relâchement vers la position de blocage et dans le deuxième sens de basculement B2 de la position de blocage vers la position de relâchement.

La pièce de blocage 18 comprend par exemple une première surface de blocage 23a, 23b contre laquelle les mâchoires 13a, 13b s'appuient, lorsque la pièce de blocage 18 est en position de blocage et que les mâchoires 13a, 13b sont en position ouverte.

La première surface de blocage 23a, 23b de la pièce de blocage 18 est par exemple ménagée sur chacune des ailes 21a, 21b de la pièce de blocage 18.

La première surface de blocage 23a, 23b de la pièce de blocage 18 est par exemple agencée globalement perpendiculairement au premier axe de translation 17, lorsque la pièce de blocage 18 est en position de blocage.

La première surface de blocage 23a, 23b de la pièce de blocage 18 peut en outre être agencée en regard de la paroi latérale de la boîte en carton 200 faisant face au chariot 10, lorsque la pièce de blocage 18 est en position de blocage.

La première surface de blocage 23a, 23b de la pièce de blocage 18 peut en outre être agencée en regard de l'âme 20 de la pièce de blocage 18.

La pièce de blocage 18 est par exemple conçue pour basculer dans le deuxième sens de basculement B2 autour de l'axe de basculement 19 de la position de blocage à la position de relâchement, lorsque le dispositif de préhension 12 se déplace de la position reculée vers la position avancée.

Lorsque la pièce de blocage 18 est en position de blocage et que le dispositif de préhension 12 se déplace de la position reculée vers la position avancée, ladite pièce de blocage 18 bloque les mâchoires 13a, 13b en position ouverte. Lorsque la pièce de blocage 18 est en position de relâchement et que le dispositif de préhension 12 atteint la position avancée, ladite pièce de blocage 18 relâche les mâchoires 13a, 13b, de sorte que chacune des mâchoires 13a, 13b pivote dans le premier sens de pivotement P1 vers la position fermée, sous l'effet des premiers organes de rappel élastique 16a, 16b, saisissant ainsi la boîte en carton 200.

De cette manière, la pièce de blocage 18 atteint la position de relâchement, lorsque le dispositif de préhension 12 atteint la position avancée, provoquant ainsi la fermeture des mâchoires 13a, 13b sur la boîte en carton 200.

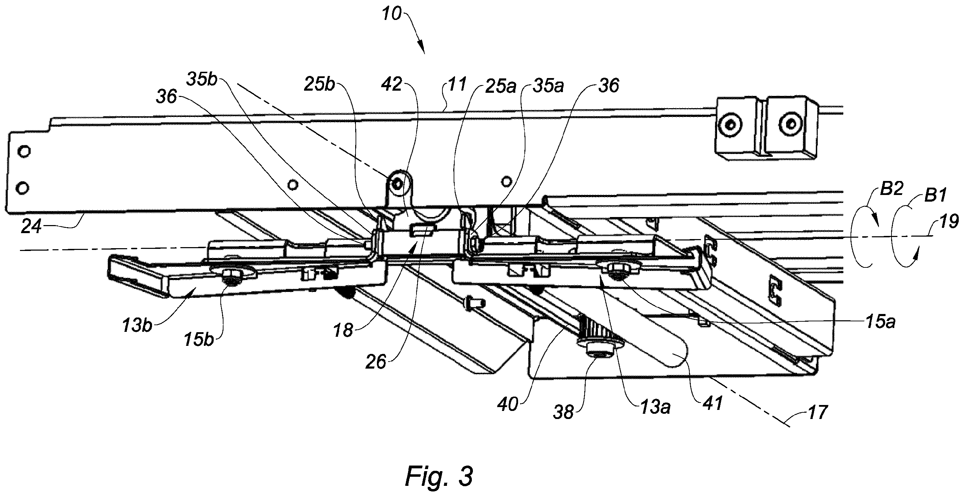

Le bâti 11 comprend par exemple une première surface de blocage 24 conçue pour entraîner la pièce de blocage 18 en basculement dans le deuxième sens de basculement B2 autour de l'axe de basculement 19 de la position de blocage à la position de relâchement, lorsque le dispositif de préhension 12 se déplace de la position reculée vers la position avancée. Un exemple de première surface de blocage 24 est représenté sur la figure 3.

La première surface de blocage 24 du bâti 11 est fixe par rapport au bâti 11, de sorte que c'est le déplacement du dispositif de préhension 12 par rapport au bâti 11 qui permet à la première surface de blocage 24 d'entraîner le basculement de la pièce de blocage 18, dès lors que la pièce de blocage 18 vient en appui contre la première surface de blocage 24.

La première surface de blocage 24 du bâti 11 est par exemple agencée sensiblement perpendiculairement par rapport à l'axe de translation 17 et en regard de la pièce de blocage 18.

La pièce de blocage 18 comprend par exemple une deuxième surface de blocage 25a, 25b conçue pour coopérer avec la première surface de blocage 24 du bâti 11.

La deuxième surface de blocage 25a, 25b de la pièce de blocage 18 est par exemple agencée sensiblement perpendiculairement à l'axe de translation 17, lorsque la pièce de blocage 18 est en position de blocage. La deuxième surface de blocage 25a, 25b de la pièce de blocage 18 est par exemple agencée en regard de la première surface de blocage 24 du bâti 11, lorsque la pièce de blocage 18 est en position de blocage.

La deuxième surface de blocage 25a, 25b est par exemple ménagée sur chacune des ailes 21a, 21b de la pièce de blocage 18. La deuxième surface de blocage 25a, 25b peut en outre être agencée en regard de l'âme 20 de la pièce de blocage 18.

La première surface de blocage 23a, 23b et la deuxième surface de blocage 25a, 25b de la pièce de blocage 18 sont par exemple agencées de part et d'autre d'un plan sensiblement perpendiculaire à l'âme 20 et comprenant l'axe de basculement 19.

La pièce de blocage 18 peut aussi comprendre des deuxièmes organes de rappel élastique 26 conçus pour entraîner la pièce de blocage 18 en basculement dans le premier sens de basculement B1 autour de l'axe de basculement 19 de la position de relâchement à la position de blocage. Autrement dit, les deuxièmes organes de rappel élastique 26 sont conçus pour rappeler la pièce de blocage 18 en basculement dans le premier sens de basculement B1 autour de l'axe de basculement 19 vers la position de blocage.

De cette manière, sans l'application d'un effort extérieur sur la pièce de blocage 18 s'opposant à celui des deuxièmes organes de rappel élastique 26, la pièce de blocage 18 est en position de blocage. Autrement dit, par défaut, la pièce de blocage 18 est en position de blocage.

Ainsi, lorsque le dispositif de préhension 12 atteint la position avancée et que la pièce de blocage 18 relâche les mâchoires 13a, 13b qui se referment sur la boîte en carton 200 pour la pincer, la pièce de blocage 18 bascule dans le premier sens de basculement B1 de la position de relâchement à la position de blocage sous l'effet des deuxièmes organes de rappel élastique 26. Le dispositif de préhension 12 peut alors reculer avec la pièce de blocage 18 en position de blocage.

Les deuxièmes organes de rappel élastique 26 comprennent par exemple au moins un ressort de torsion monté entre la pièce de blocage 18 et le support 14. Le ressort de torsion 26 comprend par exemple une portion centrale en forme de U, deux portions intermédiaires hélicoïdales s'étendant chacune depuis la portion centrale, dans des sens opposés suivant l'axe de basculement 19, et deux portions d'extrémité s'étendant depuis chacune des portions intermédiaires hélicoïdales, sensiblement perpendiculairement par rapport à l'axe de basculement 19. La portion centrale du ressort de torsion 26 est placée en appui contre la pièce de blocage 18, par exemple contre l'âme 20 de la pièce de blocage 18. Les portions intermédiaires hélicoïdales du ressort de torsion 26 sont par exemple enroulées autour de la vis 36 par l'intermédiaire de laquelle la pièce de blocage 18 bascule autour de l'axe de basculement 19 par rapport au support 14. Les portions d'extrémité du ressort de torsion 26 prennent par exemple appui sur le support 14 par l'intermédiaire d'ouvertures prévues dans ledit support 14 et dans lesquelles lesdites portions d'extrémité sont insérées.

Chacune des mâchoires 13a, 13b est par exemple conçue pour pivoter dans le deuxième sens de pivotement P2 autour de son axe de pivotement 15a, 15b de la position fermée vers la position ouverte, lorsque le dispositif de préhension 12 se déplace de la position avancée vers la position reculée.

De cette manière, les mâchoires 13a, 13b atteignent la position ouverte, lorsque le dispositif de préhension 12 atteint la position reculée.

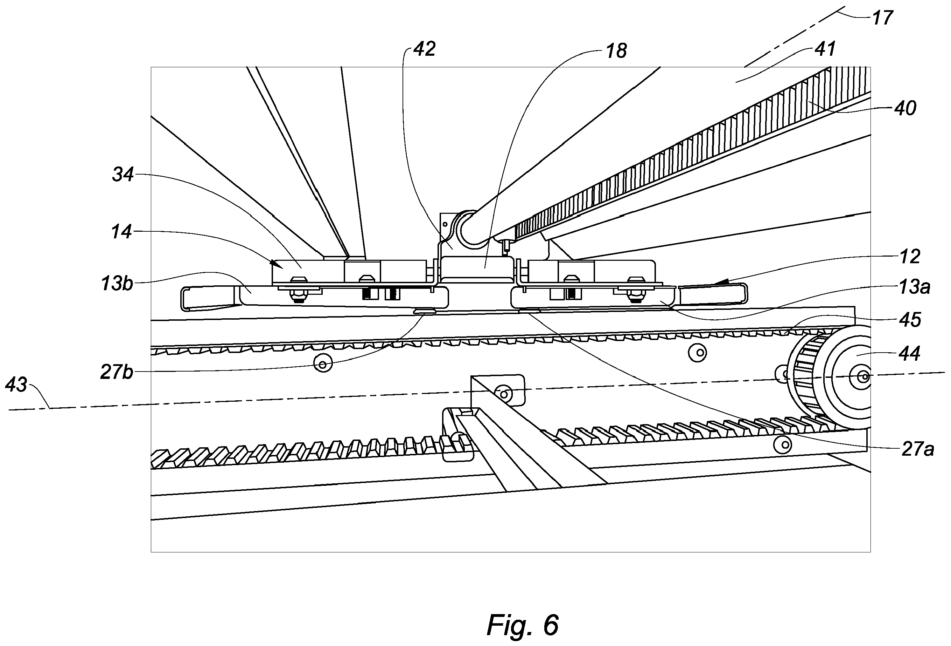

Pour cela, le bâti 11 comprend par exemple une deuxième surface de blocage 27a, 27b conçue pour entraîner chacune des mâchoires 13a, 13b en pivotement dans le deuxième sens de pivotement P2 autour de son axe de pivotement 15a, 15b de la position fermée vers la position ouverte, lorsque le dispositif de préhension 12 se déplace par rapport au bâti 11 de la position avancée vers la position reculée. Un exemple de deuxième surface de blocage 27a, 27b est représenté sur la figure 6.

La deuxième surface de blocage 27a, 27b est fixe par rapport au bâti 11, de sorte que c'est le déplacement du dispositif de préhension 12 par rapport au bâti 11 qui permet à la deuxième surface de blocage 27a, 27b d'entraîner le pivotement des mâchoires 13a, 13b, dès lors que les mâchoires 13a, 13b viennent en appui contre la deuxième surface de blocage 27a, 27b.

La deuxième surface de blocage 27a, 27b comprend par exemple une paire de vis solidaires du bâti 11 et agencées chacune en regard d'une des mâchoires 13a, 13b.

Les mâchoires 13a, 13b sont en outre conçues pour :
- entraîner la pièce de blocage 18 en basculement dans le deuxième sens de basculement B2 autour de son axe de basculement 19 de la position de blocage vers la position de relâchement, lorsque le dispositif de préhension 12 se déplace de la position avancée vers la position reculée et que chacune des mâchoires 13a, 13b pivote dans le deuxième sens de pivotement P2 autour de son axe de pivotement 15a, 15b de la position fermée vers la position ouverte, et
- lâcher la pièce de blocage 18, lorsque les mâchoires 13a, 13b atteignent la position ouverte et que la pièce de blocage 18 atteint la position de relâchement.

De cette manière, lorsque chacune des mâchoires 13a, 13b recule et pivote dans le deuxième sens de pivotement P2 vers la position ouverte, la mâchoire 13a, 13b entraîne la pièce de blocage 18 en basculement dans le deuxième sens de basculement B2 vers la position de relâchement. Puis, lorsque les mâchoires 13a, 13b atteignent la position ouverte et que la pièce de blocage 18 atteint la position de relâchement, les mâchoires 13a, 13b lâchent la pièce de blocage 18 qui bascule dans le premier sens de basculement B1 vers la position de blocage, sous l'effet des deuxièmes organes de rappel élastique 26, bloquant ainsi les mâchoires 13a, 13b en position ouverte.

Ainsi, lorsque le dispositif de préhension 12 est en position reculée, les mâchoires 13a, 13b sont à nouveau bloquées en position ouverte et sont donc prêtes à avancer pour saisir une autre boîte en carton 200.

Pour cela, la pièce de blocage 18 comprend par exemple une surface de came 28a, 28b coopérant avec les mâchoires 13a, 13b, lorsque lesdites mâchoires 13a, 13b entraînent la pièce de blocage 18 en basculement.

La surface de came 28a, 28b est par exemple conçue pour guider les mâchoires 13a, 13b jusqu'à la première surface de blocage 23a, 23b de la pièce de blocage 18, lorsque les mâchoires 13a, 13b entraînent la pièce de blocage 18 en basculement dans le deuxième sens de basculement B2 de la position de blocage vers la position de relâchement.

La surface de came 28a, 28b est par exemple ménagée sur chacune des ailes 21a, 21b de la pièce de blocage 18.

La surface de came 28a, 28b est par exemple biseautée de sorte à faciliter l'entraînement en basculement de la pièce de blocage 18 par les mâchoires 13a, 13b, lorsque chacune des mâchoires 13a, 13b pivote dans le deuxième sens de pivotement P2 vers la position ouverte.

Les mâchoires 13a, 13b présentent par exemple une forme de L.

Les mâchoires 13a, 13b comprennent chacune un premier bras 29a, 29b par l'intermédiaire duquel lesdites mâchoires 13a, 13b sont articulées sur le support 14 et un deuxième bras 30a, 30b s'étendant sensiblement en équerre depuis le premier bras 29a, 29b et par l'intermédiaire duquel les mâchoires 13a, 13b pincent la boîte en carton 200.

L'extrémité du premier bras 29a, 29b des mâchoires 13a, 13b, opposée au deuxième bras 30a, 30b, est conçue pour coopérer avec la pièce de blocage 18.

L'extrémité du premier bras 29a, 29b des mâchoires 13a, 13b est par exemple conçue pour coopérer avec la première surface de blocage 23a, 23b de la pièce de blocage 18, lorsque la mâchoire 13a, 13b est en position ouverte.

L'extrémité du premier bras 29a, 29b des mâchoires 13a, 13b peut aussi être conçue pour entraîner la pièce de blocage 18 en basculement autour de l'axe de basculement 19, lorsque le dispositif de préhension 12 se déplace de la position avancée vers la position reculée et que chacune des mâchoires 13a, 13b pivote autour de son axe de pivotement 15a, 15b.

L'extrémité du premier bras 29a, 29b des mâchoires 13a, 13b peut en outre être conçue pour coopérer avec la surface de came 28a, 28b de la pièce de blocage 18, lorsque le dispositif de préhension 12 se déplace de la position avancée vers la position reculée et que chacune des mâchoires 13a, 13b pivote autour de son axe de pivotement 15a, 15b.

L'extrémité du deuxième bras 30a, 30b des mâchoires 13a, 13b, opposée au premier bras 29a, 29b, comprend par exemple des saillies 31a, 31b pointues s'étendant sensiblement perpendiculairement depuis le deuxième bras 30a, 30b.

Les saillies 31a, 31b s'étendent par exemple en regard l'une de l'autre, lorsque les mâchoires 13a, 13b sont en position fermée.

Les saillies 31a, 31b viennent se planter dans la boîte en carton 200, notamment dans les parois latérales opposées de la boîte en carton 200, afin d'assurer la préhension de ladite boîte en carton 200 par les mâchoires 13a, 13b.

Le support 14 comprend par exemple un premier plateau 32 et un deuxième plateau 33 agencés sensiblement perpendiculairement aux axes de pivotement 15a, 15b des mâchoires 13a, 13b et reliés l'un à l'autre par l'intermédiaire d'une marche 34 (figure 6).

Les mâchoires 13a, 13b sont par exemple montées pivotantes sur le deuxième plateau 33 du support 14.

Le deuxième plateau 33 peut en outre comprendre un logement conçu pour accueillir la pièce de blocage 18.

Le deuxième plateau 33 peut encore comprendre une paire d'ailettes 35a, 35b s'étendant sensiblement perpendiculairement à l'axe de basculement 19 depuis des bords du logement et par l'intermédiaire desquelles la pièce de blocage 18 est montée pivotante sur le support 14. Un exemple d'ailettes 35a, 35b est représenté sur les figures 2 et 3.

Les ailettes 35a, 35b du support 14 comprennent par exemple chacune une ouverture s'étendant suivant l'axe de basculement 19, en correspondance avec les ouvertures des ailes 21a, 21b de la pièce de blocage 18, et accueillant la vis 36 (figures 2, 3 et 4).

Le support 14 peut aussi comprendre une surface de blocage 37a, 37b conçue pour bloquer le pivotement de chacune des mâchoires 13a, 13b au-delà de la position fermée, lorsque chacune des mâchoires 13a, 13b pivote dans le premier sens de pivotement P1 vers à la position fermée sous l'effet des premiers organes de rappel élastique 16a, 16b. Un exemple de surface de blocage 37a, 37b du support 14 est représenté aux figures 2 et 4.

La surface de blocage 37a, 37b du support 14 permet ainsi d'ajuster la position fermée des mâchoires 13a, 13b.

La surface de blocage 37a, 37b du support 14 comprend par exemple une paire de vis solidaires du support 14 et agencées chacune en regard d'une des mâchoires 13a, 13b.

Les premiers organes de rappel élastique 16a, 16b comprennent par exemple un ressort à compression monté entre chacune des mâchoires 13a, 13b, le cas échéant entre chacun des premiers bras 29a, 29b des mâchoires 13a, 13b, et le support 14, le cas échéant le deuxième plateau 33 du support 14.

Le support 14 est par exemple entraîné en translation suivant le premier axe de translation 17 par l'intermédiaire d'un premier système d'entraînement monté sur le bâti 11. Un exemple de premier système d'entraînement est visible sur les figures 1, 3 et 6.

Le premier système d'entraînement peut comprendre une poulie menante 38 et une poulie menée (non représentée) agencées à des extrémités opposées du bâti 11 suivant le premier axe de translation 17. Les poulies menante 38 et menée sont montées en rotation sur le bâti 11 autour d'un axe de rotation respectif sensiblement parallèle aux axes de pivotement 15a, 15b des mâchoires 13a, 13b. La poulie menante 38 est entraînée en rotation autour de son axe de rotation par l'intermédiaire d'un moteur électrique (non représenté) et entraîne elle-même en rotation la poulie menée par l'intermédiaire d'une courroie 40 solidaire du support 14.

Le bâti 11 peut en outre comprendre un système de guidage 41 conçu pour guider en translation le support 14 suivant le premier axe de translation 17, lorsque le dispositif de préhension 12 se déplace entre la position avancée et la position reculée. Un exemple de système de guidage 41 est représenté sur les figures 1, 3 et 6.

Le système de guidage 41 comprend par exemple un tube s'étendant suivant le premier axe de translation 17 et sur lequel le support 14 est monté coulissant suivant le premier axe de translation 17.

Le support 14 comprend par exemple au moins un panneau de guidage 42 s'étendant sensiblement perpendiculairement au premier axe de translation 17, depuis le premier plateau 32 et/ou dans le prolongement de la marche 33 et comprenant une ouverture de forme complémentaire avec le tube 41. Le support 14 est monté coulissant sur le tube 41 par l'intermédiaire de l'ouverture de son ou de ses panneaux de guidage 42.

Le bâti 11 peut aussi comprendre une surface de support (non représentée) agencée perpendiculairement aux axes de pivotement 15a, 15b des mâchoires 13a, 13b. La surface de support est conçue pour accueillir la boîte en carton 200, lorsqu'elle est pincée puis libérée par les mâchoires 13a, 13b et que le dispositif de préhension 12 se déplace de la position avancée vers la position reculée.

Le bâti 11 peut encore être pourvu d'un deuxième système d'entraînement conçu pour entraîner en translation la boîte en carton 102 par rapport au bâti 11 suivant un deuxième axe de translation 43, sensiblement perpendiculaire au premier axe de translation 17 et aux axes de pivotement 15a, 15b des mâchoires 13a, 13b.

Le deuxième axe de translation 43 est par exemple sensiblement parallèle à la direction transversale Y.

Le deuxième système d'entraînement comprend par exemple une paire de sous-systèmes d'entraînement installés à chacune des extrémités du bâti 11 suivant le premier axe de translation 17.

Chaque sous-système d'entraînement comprend par exemple une poulie menante 44 et une poulie menée (non représentée) agencées à des extrémités opposées du bâti 11 suivant le deuxième axe de translation 43. Les poulies menante 44 et menée sont montées en rotation sur le bâti 11 autour d'un axe de rotation respectif sensiblement parallèle au premier axe de translation 17. La poulie menante 44 est entraînée en rotation autour de son axe de rotation par l'intermédiaire d'un moteur électrique (non représenté) et entraîne elle-même en rotation la poulie menée par l'intermédiaire d'une courroie 45 affleurant la surface de support.

Le fonctionnement du chariot 10 est le suivant.

Lorsque le dispositif de préhension 12 est en position reculée, la pièce de blocage 18 est en position de blocage et les mâchoires 13a, 13b sont bloquées en position ouverte par la pièce de blocage 18.

Pour saisir une boîte en carton 200, le dispositif de préhension 12 se déplace de la position reculée vers la position avancée, la pièce de blocage 18 restant en position de blocage, de sorte à maintenir les mâchoires 13a, 13b en position ouverte.

Au cours du déplacement du dispositif de préhension 12 vers la position avancée, la pièce de blocage 18 entre en contact avec la première surface de blocage 24 du bâti 11 qui, sous l'effet du déplacement du dispositif de préhension 12, entraîne le basculement de la pièce de blocage 18 dans le deuxième sens de basculement B2 vers la position de relâchement.

Lorsque le dispositif de préhension 12 atteint la position avancée, la pièce de blocage 18 atteint la position de relâchement, relâchant ainsi chacune des mâchoires 13a, 13b qui pivote dans le premier sens de pivotement P1 vers la position fermée sous l'effet des premiers organes de rappel élastique 16a, 16b et pince de ce fait la boîte en carton 200. La pièce de blocage 18 bascule elle-même dans le premier sens de basculement B1 en position de blocage sous l'effet des deuxièmes organes de rappel élastique 26, les mâchoires 13a, 13b restant libres en pivotement par rapport à la pièce de blocage 18.

Le dispositif de préhension 12 se déplace ensuite de la position avancée à la position reculée solidairement avec la boîte en carton 200 retenue par les mâchoires 13a, 13b.

Au cours du déplacement du dispositif de préhension 12 vers la position reculée, les mâchoires 13a, 13b entrent en contact avec la deuxième surface de blocage 27a, 27b du bâti 11 qui, sous l'effet du déplacement du dispositif de préhension 12, entraîne chacune des mâchoires 13a, 13b en pivotement dans le deuxième sens de pivotement P2 de la position fermée vers la position ouverte. Au cours de leur pivotement vers la position ouverte, les mâchoires 13a, 13b entraînent elles-mêmes la pièce de blocage 18 en pivotement dans le deuxième sens de basculement B2 vers la position de relâchement. Les mâchoires 13a, 13b libèrent ainsi progressivement la boîte en carton 200 sur la surface de support du bâti 11.

Puis, lorsque le dispositif de préhension 12 atteint la position reculée, les mâchoires 13a, 13b en position ouverte lâche la pièce de blocage 18 qui a atteint la position de relâchement. La pièce de blocage 18 bascule alors dans le premier sens de basculement B1 vers la position de blocage sous l'effet des deuxièmes organes de rappel élastique 26 et vient ainsi bloquer à nouveau les mâchoires 13a, 13b en position ouverte.

Le chariot 10 est donc particulièrement avantageux car il permet de limiter le risque que les mâchoires 13a, 13b saisissent mal ou n'arrivent pas à saisir la boîte en carton 200, par exemple lorsque cette dernière n'est pas suffisamment rigide ou lorsqu'elle a été ramollie sous l'effet de l'humidité ou encore lorsqu'elle n'est pas bien centrée par rapport aux mâchoires 13a, 13b.

Il en outre avantageux car il ne nécessite pas d'ajouter une motorisation spécifiquement dédiée à l'ouverture et à la fermeture des mâchoires 13a, 13b, la pièce de blocage 18 permettant de bloquer les mâchoires 13a, 13b en position ouverte et l'ouverture/la fermeture des mâchoires 13a, 13b étant uniquement commandées par le déplacement desdites mâchoires 13a, 13b entre la position avancée et la position reculée.

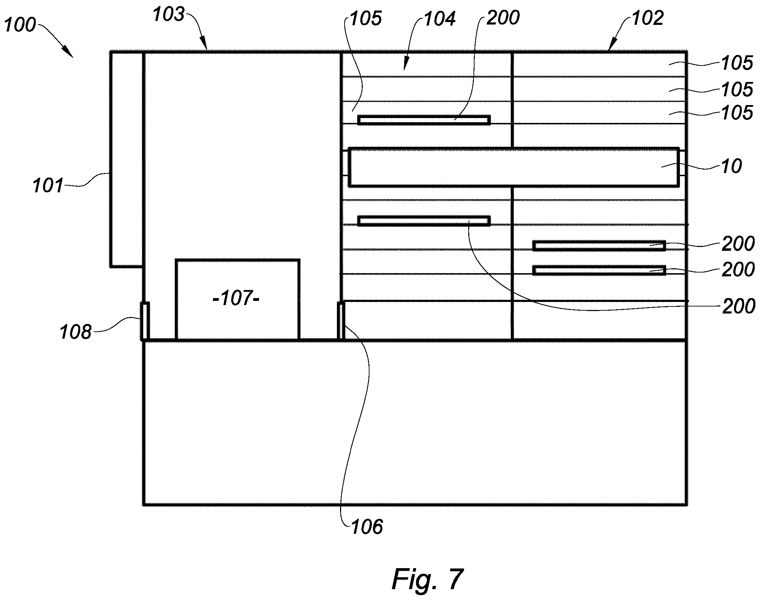

La figure 7 montre un exemple de distributeur 100 automatique de produits alimentaires préparés comprenant le chariot 10.

Le distributeur 100 comprend une interface utilisateur 101 par l'intermédiaire de laquelle un utilisateur sélectionne un produit alimentaire préparé, un dispositif de commande (non représenté) auquel est transmis la sélection de l'utilisateur, un compartiment de stockage 102 dans lequel des produits alimentaires préparés sont stockés dans des boîtes en carton 200 et un compartiment de cuisson et de livraison 103 dans lequel le produit alimentaire préparé sélectionné par l'utilisateur est cuit puis livré à l'utilisateur.

Le compartiment de stockage 102 comprend par exemple un rayonnage 104 conçu pour accueillir les boîtes en carton 200 dans lesquelles sont stockés les produits alimentaires préparés.

Pour cela, le rayonnage 104 peut comprendre une pluralité de cases 105 agencées sur au moins une colonne verticale et accueillant chacun une boîte en carton 200. Les cases 105 et donc les boîtes en carton 200 qu'elles contiennent sont libres d'accès suivant la direction longitudinale X.

Le compartiment de stockage 102 comprend en outre le chariot 10 piloté par le dispositif de commande.

Le chariot 10 est conçu pour saisir, dans le rayonnage 104, une boîte en carton 200 et pour acheminer ladite boîte en carton 200 jusqu'au compartiment de cuisson et de livraison 103 via une ouverture106 prévue entre les compartiments 102, 103 et pourvue d'un système de fermeture.

Pour cela, le chariot 10 peut par exemple être conçu pour se déplacer en translation suivant la direction verticale Z entre une position de repos dans laquelle le chariot 10 est en regard de l'ouverture 106 du distributeur 100 et une position de préhension dans laquelle le chariot 10 est en regard de la boîte en carton 200 sélectionnée par l'utilisateur.

Le chariot 10 comprend par exemple autant de dispositifs de préhension 12 que le rayonnage 104 comprend de colonnes de cases 105. De cette manière, il n'est pas nécessaire de déplacer le dispositif de préhension 12 suivant la direction transversale Y pour le placer devant la boîte en carton 200 sélectionnée.

Le compartiment de cuisson et de livraison 103 est conçu pour cuire le produit alimentaire préparé contenu dans la boîte en carton 200 acheminée par le chariot 10 et pour livrer le produit alimentaire cuit dans la boîte en carton 200 à l'utilisateur.

Pour cela, le compartiment de cuisson et de livraison 103 comprend un four de cuisson 107, un chariot (non représenté) conçu pour manipuler la boîte en carton 200 dans ledit compartiment 103, notamment pour en ouvrir le couvercle, et un tapis roulant (non représenté), ou un système de poulies et courroie analogue à ceux décrits précédemment, conçu pour déplacer en translation la boîte en carton 200, par exemple suivant la direction longitudinale X en direction du four de cuisson 107 et suivant la direction transversale Y en direction d'une ouverture de livraison 108 prévue dans le distributeur 100 et pourvue d'un système de fermeture et de verrouillage.

De cette manière, lorsqu'un utilisateur sélectionne un produit alimentaire préparé via l'interface utilisateur 101, le chariot 10 se déplace verticalement dans le compartiment de stockage 102 de sorte à placer les mâchoires 13a, 13b en regard de la case 105 du rayonnage 104 dans laquelle se situe la boîte en carton 200 comprenant le produit alimentaire préparé sélectionné (position de préhension). Le dispositif de préhension 12 est alors en position reculée.

Puis, le dispositif de préhension 12 se déplace de la position reculée à la position avancée dans laquelle les mâchoires 13a, 13b saisissent la boîte en carton 200 comme décrit précédemment.

Le dispositif de préhension 12 se déplace ensuite de la position avancée à la position reculée en entraînant avec lui la boîte en carton 200 jusqu'à ce que les mâchoires 13a, 13b s'ouvrent, libérant ainsi la boîte en carton 200 sur la surface de support du chariot 10.

Lorsque le dispositif de préhension 12 est en position reculée, le chariot 10 se déplace verticalement de sorte à se placer en regard de l'ouverture 106.

Le deuxième système d'entraînement du chariot 10 est alors activé de sorte à déplacer la boîte en carton 200 depuis le compartiment de stockage 102 vers le compartiment de cuisson et de livraison 103 à travers l'ouverture 106.

Une fois dans le compartiment de cuisson et de livraison 103, le chariot ouvre le couvercle de la boîte en carton 200 et le tapis roulant est activé pour introduire la boîte en carton 200 ouverte dans le four de cuisson 107 où le produit alimentaire préparé sélectionné par l'utilisateur est cuit dans sa boîte en carton 200.

Lorsque la cuisson du produit alimentaire préparé est terminée, le tapis roulant est à nouveau activé pour sortir la boîte en carton 200 du four de cuisson 107, puis pour livrer la boîte en carton 200 et le produit alimentaire préparé cuit à travers l'ouverture de livraison 108, le chariot refermant simultanément le couvercle de la boîte en carton 200.

## Revendications

1. Chariot (10) pour un distributeur (100) automatique de produits alimentaires préparés, notamment de pizza, comprenant :
- un bâti (11),
- au moins un dispositif de préhension (12) conçu pour saisir une boîte en carton (200) comprenant un produit alimentaire préparé,
le dispositif de préhension (12) comprenant :
∘ un support (14),
∘ une paire de mâchoires (13a, 13b) chacune articulées sur le support (14) autour d'un axe de pivotement (15a, 15b) dans un premier et dans un deuxième sens de pivotement (P1, P2) opposés,
chacune des mâchoires (13a, 13b) étant conçue pour pivoter autour de son axe de pivotement (15a, 15b) entre une position fermée dans laquelle lesdites mâchoires (13a, 13b) pincent la boîte en carton (200) et une position ouverte dans laquelle les mâchoires (13a, 13b) libèrent la boîte en carton (200),
∘ des premiers organes de rappel élastique (16a, 16b) conçus pour rappeler chacune des mâchoires (13a, 13b) en pivotement dans le premier sens de pivotement (P1) autour de son axe de pivotement (15a, 15b) vers la position fermée,
- le support (14) étant monté mobile en translation par rapport au bâti (11) suivant un premier axe de translation (17), sensiblement orthogonal par rapport aux axes de pivotement (15a, 15b) des mâchoires (13a, 13b),
le dispositif de préhension (12) étant en outre conçu pour se déplacer en translation par rapport au bâti (11) suivant le premier axe de translation (17) entre une position avancée dans laquelle les mâchoires (13a, 13b) sont en position fermée et pincent la boîte en carton (200) et une position reculée,
le chariot (10) étant **caractérisé en ce que** le dispositif de préhension (12) comprend une pièce de blocage (18) conçue pour bloquer les mâchoires (13a, 13b) en position ouverte, lorsque le dispositif de préhension (12) se déplace de la position reculée vers la position avancée, et pour relâcher les mâchoires (13a, 13b), lorsque le dispositif de préhension (12) atteint la position avancée.

2. Chariot (10) selon la revendication 1, dans lequel la pièce de blocage (18) est montée basculante sur le support (14) dans un premier et dans un deuxième sens de basculement (B1, B2) opposés autour d'un axe de basculement (19), sensiblement orthogonal aux axes d'articulation (15a, 15b) des mâchoires (13a, 13b), entre une position de blocage dans laquelle chacune des mâchoires (13a, 13b) est bloquée en pivotement dans le premier sens de pivotement (P1), lorsque les mâchoires (13a, 13b) sont en position ouverte, et une position de relâchement dans laquelle chacune des mâchoires (13a, 13b) est libre de pivoter autour de son axe de pivotement (15a, 15b) par rapport à la pièce de blocage (18).

3. Chariot (10) selon la revendication 2, dans lequel la pièce de blocage (18) est conçue pour basculer dans le deuxième sens de basculement (B2) autour de l'axe de basculement (19) de la position de blocage à la position de relâchement, lorsque le dispositif de préhension (12) se déplace de la position reculée vers la position avancée, pour libérer les mâchoires (13a, 13b) en pivotement.

4. Chariot (10) selon la revendication 2 ou la revendication 3, dans lequel le bâti (11) comprend une première surface de blocage (24) conçue pour entraîner la pièce de blocage (18) en basculement dans le deuxième sens de basculement (B2) autour de l'axe de basculement (19) de la position de blocage à la position de relâchement, lorsque le dispositif de préhension (12) se déplace de la position reculée vers la position avancée.

5. Chariot (10) selon l'une des revendications 2 à 4, dans lequel la pièce de blocage (18) comprend une première surface de blocage (23a, 23b) contre laquelle les mâchoires (13a, 13b) s'appuient, lorsque la pièce de blocage (18) est en position de blocage et que les mâchoires (13a, 13b) sont en position ouverte.

6. Chariot (10) selon l'une des revendication 2 à 5, dans lequel la pièce de blocage (18) comprend des deuxièmes organes de rappel élastique (26) conçus pour rappeler la pièce de blocage (18) en basculement dans le premier sens de basculement (B1) autour de l'axe de basculement (19) vers la position de blocage.

7. Chariot (10) selon l'une des revendications 1 à 6, dans lequel le bâti (11) comprend une deuxième surface de blocage (27a, 27b) conçue pour entraîner chacune des mâchoires (13a, 13b) en pivotement dans le deuxième sens de pivotement (P2) autour de l'axe de pivotement (15a, 15b) de la position fermée vers la position ouverte, lorsque le dispositif de préhension (12) se déplace par rapport au bâti (11) de la position avancée vers la position reculée.

8. Chariot (10) selon l'une des revendications 1 à 6 prise en combinaison avec la revendication 7, dans lequel les mâchoires (13a, 13b) sont en outre conçues pour :
- entraîner la pièce de blocage (18) en basculement dans le deuxième sens de basculement (B2) autour de l'axe de basculement (19) de la position de blocage vers la position de relâchement, lorsque le dispositif de préhension (12) se déplace de la position avancée vers la position reculée et que chacune des mâchoires (13a, 13b) pivote dans le deuxième sens de pivotement (P2) autour de son axe de pivotement (15a, 15b) de la position fermée vers la position ouverte, et
- lâcher la pièce de blocage (18), lorsque les mâchoires (13a, 13b) atteignent la position ouverte et que la pièce de blocage (18) atteint la position de relâchement.

9. Chariot (10) selon la revendication 8, dans lequel la pièce de blocage (18) comprend une surface de came (28a, 28b) coopérant avec les mâchoires (13a, 13b), lorsque lesdites mâchoires (13a, 13b) entraînent la pièce de blocage (18) en basculement dans le deuxième sens de basculement (B2) autour de l'axe de basculement (19) de la position de blocage vers la position de relâchement.

10. Distributeur (100) de produits alimentaires préparés, notamment de pizza, comprenant un chariot (10) selon l'une des revendications 1 à 9.
